# EUROPÄISCHE PATENTSCHRIFT

(11) **EP 1 387 166 B1**
(45) Veröffentlichungstag und Bekanntmachung des Hinweises auf die Patenterteilung: **29.06.2011**
(21) Anmeldenummer: 03017053.4
(22) Anmeldetag: 28.07.2003
(51) Int. Cl.: G01N 27/90

(54) **Verfahren zur Detektierung der Oxidation kohlenstoffhaltiger Fasern oder Faserbündel in Verbundwerkstoffen**
Method of detecting the oxidation of carbonaceous fibres or fibre bundles in composite materials
Procédé de détection de l'oxydation de fibres ou de faisceaux de fibres carbonées dans des matériaux composites

(30) Priorität: 30.07.2002 DE 10234551
(43) Veröffentlichungstag der Anmeldung: 04.02.2004
(73) Patentinhaber: AUDI AG, 85045 Ingolstadt (DE)
(72) Erfinder: Christ, Martin, Dr., 86517 Wehringen (DE); Heine, Michael, Dr., 86695 Allmannshofen (DE)
(74) Vertreter: Deckers, Hellmuth Alexander

(56) Entgegenhaltungen:
- US-A- 4 924 182
- US-A- 5 438 262
- US-A- 5 725 955
- T.D. NIXON, S.N. HEMSTAD, W.H. PFEIFER: "Non-Destructive Characterization of SiC Coated Carbon-Carbon Composites by Multiple Techniques" 24TH INTERNATIONAL SAMPE TECHNICAL CONFERENCE, 1992, Seiten T13-T27, XP009032633
- P. PLOTARD, C. LEFLOCH: "Nondestructive Inspection for Carbon-Carbon with Adapted Coating for Oxidation" GOVERNMENT REPORTS ANNOUNCEMENTS & INDEX, Bd. 91, Nr. 7, 1991, Seite 152 XP009032613 Springfield, VA (USA)

## Beschreibung

Die Erfindung betrifft ein Verfahren zur Detektierung der Oxidation kohlenstoffhaltiger Fasern oder Faserbündel in Verbundwerkstoffen gemäß Anspruch 1.

Aus dem Beitrag "Non-Destructive Characterization of SiC Coated Carbon-Carbon Composites by Multiple Techniques" (24th International SAMPE Technical Conference, October 20 .. 22, 1992) von Thomas D. Nixon war bekannt, den Kohlenstoffverlust durch Oxidation in mit einer durch CVD aufgebrachten Schutzschicht aus Siliciumcarbid versehenen Körpern aus mit Fasern aus Kohlenstoff verstärkten Verbundwerkstoffen mit einer Matrix aus Kohlenstoff zu bestimmen, indem durch Wirbelstrommessungen die durch die Oxidation von sowohl den Fasern als auch der Matrix verursachte Änderung der Leitfähigkeit erfaßt wurde.

In der EP 0 619 801 B1 wird als problematisch beschrieben, dass bei kohlenstofffaserverstärkten Verbundwerkstoffen mit keramischer Matrix wie beispielsweise C/SiC-Werkstoffen (Kohlenstoff-Siliziumcarbid) der Kohlenstoff insbesondere bei Anwendungen unter höherer Temperatur zur Oxidation neigt. Dieses Verhalten ist insbesondere dann von Nachteil, wenn aus dem kohlenstoffhaltigen Werkstoff in einer Hochtemperaturumgebung eingesetzte Formkörper gebildet werden, wie beispielsweise Bremsscheiben von Fahrzeugen. Bei solchen Bremsscheiben konnte bei Betriebstemperaturen von ca. 700 °C bis 1000 ° C in der Vergangenheit eine unerwünschte Oxidation der Kohlenstofffasern beobachtet werden. Bei fortgeschrittenem Abbrand bzw. Oxidation der Kohlenstofffasern kann eine Strukturschädigung der Bremsscheibe eintreten, welche deren Steifigkeit und Festigkeit negativ beeinflusst. Im Hinblick auf die kostspielige Fertigung solcher faserverstärkter C-/SiC Bremsenbauteile ist ein bedarfsgerechter einem vorsorglichen Austausch vorzuziehen. Hierzu ist allerdings eine regelmäßige zerstörungsfreie Prüfung der Bremsenbauteile erforderlich.

In der Vergangenheit wurde versucht, durch Wägung von aus den genannten Verbundwerkstoffen gefertigten Bauteilen einen oxidationsbedingten Kohlenstoffverlust festzustellen. Diese Methode setzt jedoch das Demontieren des C/SiC-Bauteils voraus. Weiterhin wurden solche Bauteile einer optischen Prüfung unterzogen. Diese Methode gibt zwar einen guten Rückschluss auf den Oberflächenzustand des C/SiC-Bauteils, ist aber nur dann für die Beurteilung für den Gesamtzustand des Bauteils geeignet, wenn der Oberflächenzustand exakt mit dem Restzustand des restlichen Bauteil korreliert. Dies ist in den seltensten Fällen zuverlässig genug.

Der Erfindung liegt demzufolge die Aufgabe zugrunde, ein zuverlässiges, einfach durchzuführendes und genau arbeitendes Verfahren zur zerstörungsfreien Detektion von Oxidation an kohlenstoffhaltigen Fasern der eingangs genannten Verbundwerkstoffe anzugeben.

Diese Aufgabe wird erfindungsgemäß durch die kennzeichnenden Merkmale von Anspruch 1 gelöst.

Erfindungsgemäß erfolgt die Detektierung der Oxidation von kohlenstoffhaltigen Fasern oder Faserbündeln unter Anwendung des an sich bekannten Wirbelstromverfahrens, wie es beispielsweise in der DE 199 45 944 A1 beschrieben ist. Eine Anwendung dieses Verfahrens bei Verbundwerkstoffen mit nichtleitender oder halbleitender keramischer Matrix erscheint wegen deren beschränkter Induktionsfähigkeit jedoch zunächst nicht erfolgversprechend. Weiterhin handelt es sich bei der Oxidation von Kohlenstofffasern nicht um durch mechanische Beanspruchung entstandene Risse als bekannte und typische Anwendung des Wirbelstromverfahrens.

Anders als beim Stand der Technik erfolgt die Anwendung des Wirbelstromverfahrens nicht an einem bezüglich der elektrischen Leitfähigkeit homogenen Werkstoff, sondern an einem Verbundwerkstoff, in welchem elektrisch gut leitendes Material (kohlenstoffhaltige Fasern) mit nicht- oder halbleitendem Material (keramische Matrix) kombiniert ist. Die Anwendung des Wirbelstromverfahrens auf Verbundwerkstoffe mit den genannten Eigenschaften hat in überraschender und vorteilhafter Weise zur Folge, dass die Oxidation der Kohlenstofffasern eine drastische Änderung des Ausgangssignals des Wirbelstromverfahrens im Vergleich zu einem von der Oxidation nicht betroffenen Referenzwerkstoff hervorrufen. Der für die Induktion der Wirbelströme notwendige elektrische Leiter, die kohlenstoffhaltigen Fasern, wird nämlich durch Oxidation teilweise oder vollständig zerstört, was sich im Ausgangssignal besonders deutlich niederschlägt. Infolgedessen arbeitet das an sich bekannte Wirbelstromverfahren angewandt auf die genannten Verbundwerkstoffe wesentlich empfindlicher, genauer und zuverlässiger.

Darüber hinaus kann eine Oxidation der kohlenstoffhaltigen Fasern auch in tieferen Lagen des Verbundwerkstoffs festgestellt werden, weil die Fasern oder Faserbündel in dem durch Kurzfasern verstärkten Verbundwerkstoff in der nichtleitenden oder halbleitenden Matrix regellos verteilt und cdurch diese voneinander elektrisch isoliert sind. Demzufolge tritt bei der erfindungsgemäßen Anwendung des Wirbelstromverfahrens an den genannten Verbundwerkstoffen der sog. "Skin-Effekt" nicht auf. Dieser Effekt kommt bei Anwendung des Wirbelstromverfahrens auf elektrisch leitende Werkstoffe mit homogener elektrischer Leitfähigkeit vor, wobei Defekte lediglich in der Oberflächenschicht des Werkstoffs detektiert werden.

Die kohlenstoffhaltigen Fasern sind elektrisch leitend und haben üblicherweise einen Durchmesser von 5 µm bis 12 µm, bevorzugt 6 µm bis 10 µm, und als Kurzfasern eine Länge von 0,1 mm bis 30 mm, bevorzugt 0,2 mm bis 5 mm. Bei der Oxidation werden die Fasern von der Oberfläche her angegriffen, wobei der Angriff im wesentlichen gleichmäßig auf der Oberfläche erfolgt.

Vorzugsweise ist die keramische Matrix zumindest in der Randschicht des Verbundwerkstoffs ausgebildet und enthält neben Siliciumcarbid (SiC) als Hauptbestandteil (also in einem Massenanteil von mindestens 50 %), auch Silicium (Si) und/oder Siliciumlegierungen. Die Anwendung des Wirbelstromverfahrens erfolgt daher vorzugsweise an faserverstärkten C/SiC-Werkstoffen, bei welchen kohlenstoffhaltige Fasern, insbesondere Kohlenstofffasern oder Graphitfasern in einer überwiegend aus SiC und Si gebildeten Matrix gebunden sind. Die C/SiC-Verbundkeramiken können auch Fasern umfassen, die neben Kohlenstoff noch weitere Elemente, wie beispielsweise Si, B, N, P oder Ti enthalten. Diese Fasern sind hochtemperaturbeständig und besitzen gegenüber der vorzugsweise nicht oder halbleitenden Matrix eine signifikant höhere elektrische Leitfähigkeit. Während die Resistivität (spezifischer elektrischer Widerstand) der kohlenstoffhaltigen Fasern ca. 1 bis 10 µΩ·m beträgt, liegt die Resistivität von Silicium bei ca. 1000 µΩ·m (Halbleiter), und die von Siliciumcarbid bei ca. 10⁶ bis 10⁷ µΩ·m (Isolator, Nichtleiter). Die Verbundwerkstoffe, die hier betrachtet werden, haben eine Resistivität im Bereich von 30 bis 400 µΩ·m. Im folgenden und in den Ansprüchen sind unter dem Begriff Fasern sowohl einzelne Fasern als auch Faserbündel zu verstehen, die durch Polymere oder deren Pyrolyseprodukte, bevorzugt durch graphitischen Kohlenstoff gebunden, sein können. Die Fasern bzw. Faserbündel sind in der Matrix regellos verteilt, wobei durch die halbleitende oder nichtleitende Matrix eine elektrische Leitung zwischen den verteilten Fasern bzw. Faserbündeln beschränkt ist.

Als Faserbündel werden Agglomerate von im wesentlichen parallelen Kurzfasern bezeichnet, in denen ca. 500 bis ca. 20.000 Einzelfasern vorhanden sind.

Die Vorgehensweise zur Herstellung von C/SiC-Werkstoff ist dadurch gekennzeichnet, dass zunächst ein CFC-Werkstoff gebildet wird. Besonders bevorzugt ist die Herstellung von kurzfaserbündelverstärktem CFK (Kohlenstofffaserverstärkte Kunststoffe), bestehend aus mit einer carbonisierbaren Substanz und/oder mit Kohlenstoff beschichteten Kohlenstofffasern oder Faserbündeln und Füllstoffen und Bindern, das gegebenenfalls mit einem Presskern zur gewünschten Form gepresst und ausgehärtet und hierauf carbonisiert und/oder graphitiert wird, so daß ein CFC- oder C/C- Formkörper als Zwischenprodukt entsteht. Da die CFK- und CFC-Zwischenprodukte im Vergleich zur späteren Verbundkeramik noch eine relativ geringe Härte aufweisen, werden spanabhebende Bearbeitungsgänge wie beispielsweise das Anbringen von Bohrungen oder das Fräsen bevorzugt an diesen Zwischenprodukten durchgerührt

Der vorzugsweise verwendete Formkörper aus kohlenstofffaserverstärktem Kohlenstoffwerkstoff (CFC) wird anschließend endformnah bearbeitet und dann bei Temperaturen um etwa 1600 °C im Vakuum oder unter Inertgas mit einer Siliciumschmelze oder einer Siliciumlegierungsschmelze infiltriert, wodurch zumindest ein Teil des Kohlenstoffs der Matrix und/oder der Fasern in SiC umgewandelt wird. Neben Silicium können als weitere Bestandteile der Schmelze auch Bor (B) und die Metalle der Nebengruppen I bis VIII verwendet werden, insbesondere Ti, Cr, Fe, Mo und Ni. Durch die Flüssiginfiltration des CFC-Formkörpers mit Silicium oder einer siliciumhaltigen Schmelze entsteht ein dichter, fester und sehr harter Formkörper aus C/SiC-Werkstoff enthaltend Fasern, im allgemeinen Kohlenstofffasern, mit einer Matrix aus überwiegend SiC und Si.

Alternativ kann die Matrix des Formkörpers ganz oder teilweise durch eine Gasphaseninfiltration (CVD oder CVI) erzeugt werden. Dann weist die Matrix einen relativ hohen SiC-Gehalt auf, typischerweise über 95 %. Weiterhin kann die Herstellung der Matrix durch die Pyrolyse von Sihaltigen, präkeramischen Polymeren erfolgen, zum Beispiel durch die Pyrolyse von Polymeren, die eines oder mehrere der Elemente Si, B, C, N, P oder Ti enthalten.

Die C/SiC-Formkörper werden vorzugsweise in Form von Bremsscheiben, Bremsbelägen oder Kupplungsscheiben gefertigt. Wegen der guten Temperaturbeständigkeit ist jedoch jegliche weitere Anwendung denkbar, bei welcher hohe Temperaturen auftreten, beispielsweise als Auskleidungskörper zur Auskleidung von Öfen und Brennkammern oder als Hitzeschilde, insbesondere beim Triebwerks- oder Düsenbau. Formkörper werden als " thermisch hochbelastbar" bezeichnet, wenn sie die bei diesen Anwendungen auftretenden Temperaturen überstehen, ohne daß ihre Festigkeit auf weniger als 80 % des Ausgangswertes absinkt.

In jedem Fall liegt ein Formkörper aus Verbundkeramik mit in einer nicht- oder halbleitenden Matrix aus SiC und Si eingebetteten, kohlenstoffhaltigen Fasern vor. Im Sinne der Erfindung ist dabei das Si als Halbleiter und das SiC als Nichtleiter anzusehen. Dies trifft insbesondere bei den zur Messung bevorzugten Temperaturen weit unterhalb der maximalen Anwendungstemperatur der Bauteile zu. Alternativ kann die Matrix auch aus einem anderen elektrisch nichtleitenden Material bestehen, beispielsweise aus TiC, TiC/SiC, Si₃N₄, SiC/Si₃N₄, oder Al₂O₃.

Der Massenanteil an SiC in der Verbundkeramik liegt bei mindestens 50 %, bezogen auf die gesamte Masse des Formkörpers. Je nach Tiefe der Infiltration mit den Stoffen, die nach Reaktion mit Kohlenstoff die Matrix bilden, kann sich diese Verbundkeramik nur auf eine Randschicht beschränken oder auch durch den gesamten Formkörper erstrecken. Der Massenanteil der Matrix und deren Zusammensetzung können dabei innerhalb des Formkörpers variieren, insbesondere in der Tiefe, wobei der Massenanteil der Matrix an der Oberfläche bevorzugt höher liegt als im Inneren des Formkörpers, mitunter auch bei nahezu 100 %.

Gemäß einer bevorzugten Variante wird der CFC-Werkstoff durch Flüssigsilicierung in C/SiC umgewandelt. Dabei spielt es keine Rolle, ob der CFC-Werkstoff ganz oder nur teilweise mit Silicium oder Siliciumlegierung infiltriert und zu C/SiC umgesetzt wird. Es muss lediglich die Randschicht des Formkörpers zu C/SiC umgesetzt worden sein, die auch zu nahezu 100 % aus der Matrix, insbesondere aus SiC, bestehen kann. Verwendet werden auch CFC-Formkörper, bei denen eine Silicierung lediglich im Randbereich durchgeführt wurde, aber der Kern aus CFC bestehen bleibt. Die Dicke der Randschicht für die vorliegende Erfindung beträgt mindestens 0,2 mm, vorzugsweise mehr als 0,5 mm und besonders bevorzugt mehr als 5 mm.

Die Flüssigsilicierung von CFC führt nach dem Abkühlen des Werkstoffs von einer Prozesstemperatur von etwa 1500 bis 1900 °C auf Raumtemperatur aufgrund der unterschiedlichen Temperaturausdehnungskoeffizienten von Fasern und Matrix zu einer mit offenen Mikrorissen und Poren durchsetzten Matrix, wobei sich die offenen Risse und Poren bis weit in die Tiefe des aus der C/SiC-Keramik bestehenden Formkörpers erstrecken und sich bevorzugt an den kohlenstoffhaltigen Verstärkungsfasern ausbilden. Dies gilt ebenso für die Verfahren der Gasphaseninfiltration oder der Polymerpyrolyse, da auch hier von hoher Prozesstemperatur auf geringere Temperaturen abgekühlt wird. Dieser Effekt tritt besonders dann auf, wenn die SiChaltige Randschicht einen höheren Massenanteil der Matrix als das Innere des Werkstoffes hat.

Diese offenen Risse und Poren bilden Pfade für eindringenden Sauerstoff, so dass insbesondere die in der Matrix gebundenen kohlenstoffhaltigen Fasern der Oxidation ausgesetzt sind. Anwendungen des Formkörpers im Hochtemperaturbereich und in korrosiven Medien, wie sie für derartige Werkstoffe üblich sind, verstärken den oxidativen Angriff weiter. Wie eingangs bereits erwähnt, werden aus dem C/SiC-Werkstoff unter anderem Bremsscheiben von Fahrzeugen gefertigt, wobei diese Bauteile im Betrieb Temperaturen von über 700 °C erreichen können, so dass insbesondere solche Bauteile einem oxidativen und strukturschädigenden Angriff ausgesetzt sind. Bei diesem Sicherheitsbauteil ist die Kenntnis des genauen Werkstoffzustandes von besonderer Bedeutung.

Erfindungsgemäß wird das an sich und beispielsweise aus der DE 199 45 944 A1 bekannte Wirbelstromverfahren zur Detektion der Oxidation der kohlenstoffhaltigen Fasern bzw. Faserbündel angewandt, welches dort zur zerstörungsfreien Detektion von Rissen in elektrisch leitendem Material verwendet wird. Eine Anwendung in halbleitendem oder nichtleitendem Material ist nicht erwähnt. Beim Wirbelstromverfahren werden durch eine von Hochfrequenzstrom durchflossene Induktionsspule in elektrisch leitenden Werkstoffen elektrische Wirbelströme induziert. Die im Werkstoff auftretenden Wirbelströme werden mittels einer Prüfspule eines Detektors erfasst, beispielsweise als Induktionsspannung, welche proportional der durch die Wirbelströme hervorgerufenen magnetischen Flussdichte ist. Als Detektor kann auch ein Magnetometer mit einer Prüfspule zur Messung der Amplituden der Flussdichte oder ein Gradiometer verwendet werden, mit dem der Gradient der erzeugten Flussdichte erfasst wird. Änderungen des magnetischen Felds bzw. der Induktionsspannung in der Prüfspule lassen auf das Vorhandensein von Defekten im Werkstoff schließen.

Bevorzugt wird die Messung berührungslos durchgeführt. Die Möglichkeit der berührungslosen Messung ist besonders dann von Vorteil, wenn die Prüfintervalle eine vollständige Abkühlung der Hochtemperaturbauteile im Einsatz oder Test nicht zulassen würden.

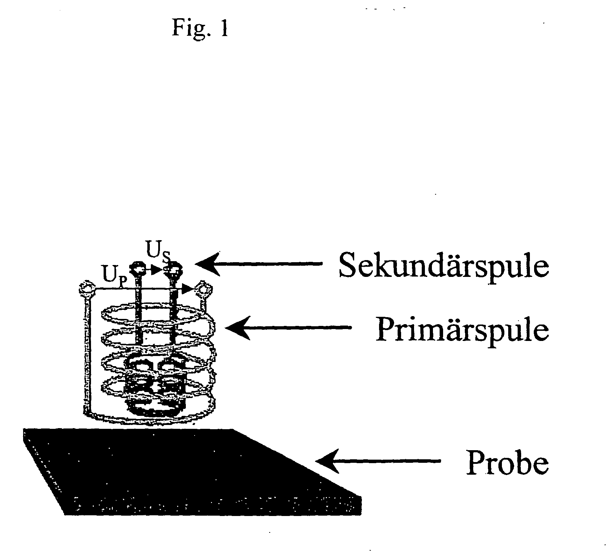

Im vorliegenden Fall wird dieses Verfahren auf Formkörper aus dem oben beschriebenen Verbundwerkstoff angewandt. Ein Anwendungsbeispiel ist nachfolgend erläutert und durch die Figur veranschaulicht, die in stark schematisierter Weise eine Vorrichtung zur anwendung des Wirbelmomverfahrens an einer Bremsscheibe im eingebauten Zustand zeigt.

### Beschreibung des Ausfühtungsbeispiels

In der Figur ist eine Primär- oder Induktionsspule dargestellt, an welche eine Primärspannung Uₚ angelegt und welche von einem Hochfrequenzstrom durchflossen ist. Infolgedessen wird in einem Formkörper (Probe), vorzugsweise einer Bremsscheibe aus einer C/SxG-Verbundkeramik mit eingebetteten Kohlenstofffasern ein magnetisches Wechselfeld erzeugt, das in den Kohlenstoiffasern elektrische Wirbelströme induziert. Von der Bremsscheibe ist in der Figur aus Maßstabsgründen lediglich ein Ausschnitt gezeigt. Die Primärspule ist bezogen auf ihre Mittelachse vorzugsweise senkrecht und mit ihrer Stirnfläche in unmittelbarer Nachbarschaft zur Außenfläche der Bremsscheibe angeordnet.

Die Wirbelströme induzieren wiederum einen Stromfluss durch eine Sekundärspule, durch welchen eine Sekundärspannung Uₛ hervorgerufen wird. Die Sekundärspule ist vorzugsweise auf der gleichen Seite der Bremsscheibe wie die Primärspule angeordnet und von dieser umgehen. Zur Bestimmung des Ausmaßes der Oxidation der Kohlenstofffasern der Bremsscheibe kann sowohl der Betrag der Sekundärspannung Uₛ wie auch die Phasenverschiebung zwischen dieser und der Primärspannung Uₚ herangezogen werden.

## Patentansprüche

1. Verfahren zur Detektieru,ng der Oxidation kohlenstoffhaltiger Fasern oder Faserbündel in Formkörpern aus Verbundkeramik mit in einer nichtleitenden oder halbleitenden Matrix aus Siliciumcarbid und Silicium eingebetteten kohlenstoffhaltigen Fasern, mit einem Massenanteil von mindestens 50 % an Siliciumcarbid, bezogen auf die gesamte Masse des Formkörpers, unter Anwendung des Wirbelstromverfahrens, wobei in einem solchen Formkörper aus Verbundwerkstoff in den Fasern oder Faserbündeln, die in Form von elektrisch leitenden Kurzfasern mit einer Länge von 0,1 mm bis 30 mm vorliegen und in der nichtleitenden oder halbleitenden keramischen Matrix regellos verteilt und durch diese Matrix elektrisch voneinander isoliert sind, ein Wirbelstrom induziert wird, und der von diesem Wirbelstrom induzierte Stromfluß in einer Sekundärspule ein Ausgangssignal erzeugt.

2. Verfahren nach Anspruch 1, **dadurch gekennzeichnet, dass** der Wirbelstrom in den Fasern in einem Verbundkörper induziert wird, in dem die keramische Matrix zumindest in einer Randschicht des Verbundkörpers ausgebildet ist.

3. Verfahren nach Anspruch 2, **dadurch gekennzeichnet, dass** der Wirbelstrom in den Fasern in einem Verbundkörper induziert wird, in dem die Matrix zumindest in der Randschicht SiC als Hauptbestandteil und als weitere Phasen Si und/oder Si-Legierungen enthält.

4. Verfahren nach einem oder mehreren der vorhergehenden Ansprüche 1 bis 3, **dadurch gekennzeichnet, dass** der Wirbelstrom in den Fasern in einem Verbundkörper induziert wird, in dem die kohlenstoffhaltigen Fasern Kohlenstofffasern, Graphitfasern oder Fasern, die eines oder mehrere der Elemente Si, B, C, N, Ti, oder P enthalten, und/oder mit Kohlenstoff beschichtete Fasern umfassen.

5. Verfahren nach Anspruch 1, **dadurch gekennzeichnet, dass** das Ausgangssignal gemessen wird, indem eine Primärspule und eine Sekundärspule auf derselben Seite eines aus dem Verbundwerkstoff gefertigten Formkörpers angeordnet werden.

## Claims

1. A method of detecting oxidation of carbon-containing fibers or fiber bundles in shaped bodies composed of composite ceramic having carbon-containing fibers embedded in a nonconductive or semiconducting matrix of silicon carbide and silicon, having a mass fraction of at least 50 % of silicon carbide, based on the total mass of the shaped body, using the eddy current method, wherein an eddy current is induced in the fibers or fiber bundles which are present in the form of electrically conductive short fibers having a length of from 0.1 mm to 30 mm in such a shaped body composed of composite material and are distributed in a disordered manner in the nonconductive or semiconducting ceramic matrix and are electrically insulated from one another by this matrix and the current induced by this eddy current generates an output signal in a secondary coil.

2. The method as claimed in claim 1, wherein the eddy current is induced in the fibers in a composite body in which the ceramic matrix is formed at least in an outer layer of the composite body.

3. The method as claimed in claim 2, wherein the eddy current is induced in the fibers in a composite body in which the matrix contains SiC as main constituent and Si and/or Si alloys as further phases at least in the outer layer.

4. The method as claimed in one or more of claims 1 to 3, wherein the eddy current is induced in the fibers in a composite body in which the carbon-containing fibers comprise carbon fibers, graphite fibers or fibers containing one or more of the elements Si, B, C, N, Ti or P and/or carbon-coated fibers.

5. The method as claimed in claim 1, wherein the output signal is measured by arranging a primary coil and a secondary coil on the same side of a shaped body made of the composite material.

## Revendications

1. Procédé pour détecter l'oxydation de fibres ou de faisceaux de fibres contenant du carbone dans des corps moulés en céramique composite qui comporte des fibres contenant du carbone enrobées dans une matrice non conductrice ou semi-conductrice en carbure de silicium et en silicium, dont la fraction massique est d'au moins 50 % en carbure de silicium par rapport à la masse totale du corps moulé, en utilisant le procédé des courants de Foucault,
un courant de Foucault étant induit dans un tel corps moulé en matériau composite dans les fibres ou les faisceaux de fibres qui se présentent sous forme de fibres courtes électroconductrices d'une longueur de 0,1 mm à 30 mm et qui sont réparties aléatoirement dans la matrice céramique non conductrice ou semi-conductrice et sont électriquement isolées les unes par rapport aux autres par cette matrice, et le flux de courant induit par ce courant de Foucault produisant un signal de sortie dans une bobine secondaire.

2. Procédé selon la revendication 1, **caractérisé en ce que** le courant de Foucault est induit dans les fibres d'un corps composite dans lequel la matrice céramique est au moins formée dans une couche superficielle du corps composite.

3. Procédé selon la revendication 2, **caractérisé en ce que** le courant de Foucault est induit dans les fibres d'un corps composite dans lequel la matrice contient, au moins dans la couche superficielle, du SiC comme composant principal et du Si et/ou des alliages de Si comme autres phases.

4. Procédé selon l'une des revendications 1 à 3, **caractérisé en ce que** le courant de Foucault est induit dans les fibres d'un corps composite dans lequel les fibres contenant du carbone comprennent des fibres de carbone, des fibres de graphite ou des fibres qui contiennent un ou plusieurs des éléments Si, B, C, N, Ti ou P, et/ou des fibres revêtues de carbone.

5. Procédé selon la revendication 1, **caractérisé en ce que** le signal de sortie est mesuré en plaçant une bobine primaire et une bobine secondaire du même côté d'un corps moulé en matériau composite.
